# EUROPEAN PATENT APPLICATION

(11) **EP 4 105 139 A1**
(43) Date of publication of application: **21.12.2022**
(21) Application number: 22179037.1
(22) Date of filing: 14.06.2022
(51) Int. Cl.: B65D 35/02, B65D 35/10, B65D 35/12

(54) **PAPER SQUEEZE TUBE**

(30) Priority: 17.06.2021 TW 110122190
(71) Applicant: Hsu, Yu-Ting, Neihu Dist. (TW)
(72) Inventor: Hsu, Yu-Ting, Neihu Dist. (TW)
(74) Representative: Cabinet Chaillot

(57) **Abstract**

A paper squeeze tube is revealed. The paper squeeze tube includes a cap, a front tube, a rear tube, and a clamping ring. The paper squeeze tube is completely made of environmentally-friendly materials to replace conventional squeeze tube made of plastic or aluminum. The cap, a front tube, and a clamping ring are made of biodegradable plant materials which is mainly formed by bamboo powder. The cap is connected to a tube body of the front tube while the rear tube is made of waterproof paper and having an upper end connected with the front tube. The front tube and the cap work together to seal the upper end of the rear tube and further form an intact and sealed paper squeeze tube. The paper squeeze tube is suitable for substances or commodities such as toothpaste, engine lubricant, oils, adhesives, and facial cleanser.

## Description

### BACKGROUND OF THE INVENTION

### Field of the Invention

The present invention relates to a biodegradable container, especially to a biodegradable paper squeeze tube.

### Description of Related Art

A squeeze tube is collapsible, lightweight, and convenient to use so it is commonly used for storage of toothpaste or other substances or our daily essentials such as engine lubricant, oils, adhesives, and facial cleanser. According to the news reports, hundreds of millions of used toothpaste tubes or other collapsible tubes are dumped and buried in landfills every year globally. Besides aluminum molding, most of conventional squeeze tubes are produced by a plurality layers of plastic, polymer, and resin. The plastic squeeze tubes made of polyethylene (PE), polypropylene (PP), etc. are not only unable to be reused and recycled, but also taking more than a hundred years to break down completely.

In order to solve environmental pollution caused by the toothpaste squeeze tubes, a Canadian entrepreneur has created a toothpaste that comes in the form of a tablet called Change Toothpaste to provide a way to achieve good oral hygiene without generating a large amount of plastic waste. The tablets come in compostable paper bag packaging for zero-waste.

Although the above toothpaste tablets can reduce the amount of the used toothpaste squeeze tubes, there are still a lot of commodities stored in plastic squeeze tubes and further resulted in environmental pollution.

### SUMMARY OF THE INVENTION

Therefore, it is a primary object of the present invention to provide a paper squeeze tube which is completely made of environmentally-friendly materials and having a simple structure for solving the problems mentioned above.

In order to achieve the above object, a paper squeeze tube according to the present invention includes a cap, a front tube, a rear tube, and a clamping ring. The cap made from plant materials is provided with at least one first thread on an inner surface thereof. The front tube is made from plant materials and composed of a tube body which is a hollow tube provided with an opening on each of two ends thereof, a connecting segment connected to one end of the tube body and integrated with the tube body, at least one second thread arranged at an outer surface of the tube body and able to be engaged with the first thread, and a circular groove. The connecting segment is composed of an end plate disposed on one side thereof and a circular portion located on the other side thereof and opposite to the end plate. The circular groove is arranged at an outer side of the circular portion and recessed toward a center of the circular portion. The rear tube which is a hollow tube made of waterproof paper includes an upper end and a lower end. The upper end of the rear tube is connected with the connecting segment of the front tube while the lower end of the rear tube is closed. The clamping ring is made from plant materials and mounted in the circular groove on the connecting segment of the front tube for pressing and tightening the upper end of the rear tube in the circular groove.

Preferably, the cap, the front tube, and the clamping ring are made from the plant material which is a mixture of bamboo powder and plastic able to be decomposed naturally and produced by molding of the mixture.

Preferably, the plastic able to be decomposed naturally is poly(lactic acid) (PLA).

Preferably, the end plate of the front tube is a surface extended radially from a center of the tube body in a shape of a circle or an ellipse.

Preferably, the rear tube consists two layers-an inner layer which is a waterproof layer made from waterproof material and an outer layer made of fiber paper.

Preferably, the waterproof material for the inner layer is poly(lactic acid) (PLA) film.

Preferably, the upper end of the rear tube is adhered to the circular groove on the connecting segment of the front tube by the inner layer to be in a sealed state.

Preferably, the clamping ring includes a first clamping member and a second clamping member which are working together to form a ring. A shape of the clamping ring is consistent with a shape of the circular groove on the connecting segment of the front tube.

The present paper squeeze tube features on that the paper squeeze tube is having simple structure and completely made of environmentally-friendly materials, able to replace conventional squeeze tubes made of plastic which is not biodegradable or unable to be decomposed naturally (PP, PE, etc.) or aluminum tube.

### BRIEF DESCRIPTION OF THE DRAWINGS

The structure and the technical means adopted by the present invention to achieve the above and other objects can be best understood by referring to the following detailed description of the preferred embodiments and the accompanying drawings, wherein:
Fig. 1 is an exploded view of an embodiment of a paper squeeze tube according to the present invention;
Fig. 2 is a perspective view of the embodiment in Fig. 1 according to the present invention;
Fig. 3 is a sectional view of the embodiment in Fig. 2 according to the present invention.

### DETAILED DESCRIPTION OF THE PREFERRED EMBODIMENT

The words including upper, lower, left and right used to describe positions in the following embodiments represent directions of embodiments shown in the figures unless otherwise defined. The direction-related words (such as upper, lower, left, right, front, and rear) mentioned are used to explain relative relationship between the respective components or structure of the embodiments such as positional relationship, connection relationship, and action relationship.

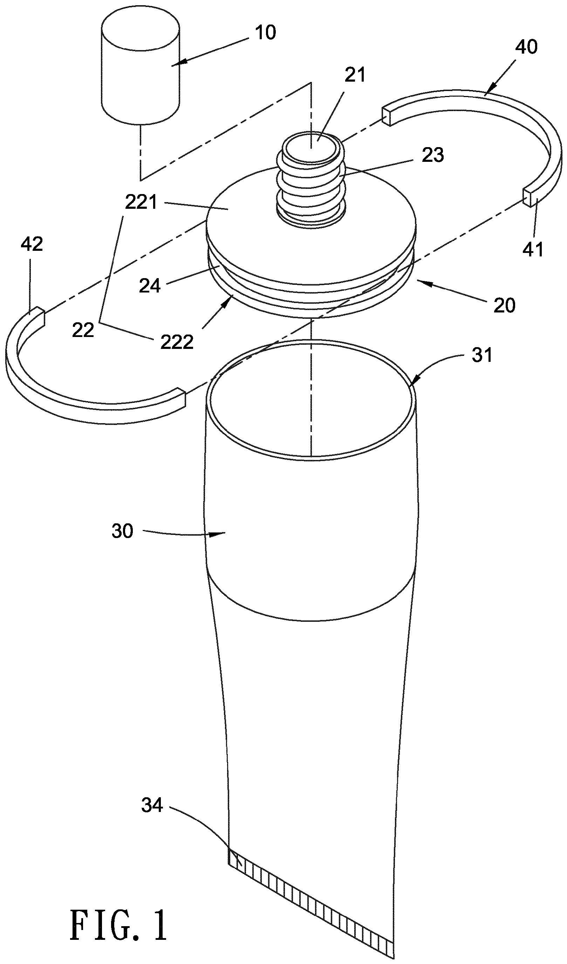

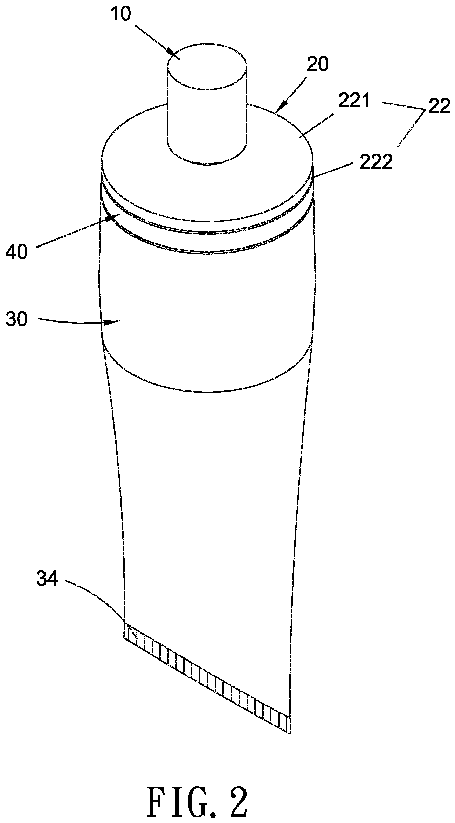

Refer to Fig. 1 and Fig. 2, a paper squeeze tube according to the present invention includes a cap 10, a front tube 20, a rear tube 30, and a clamping ring 40.

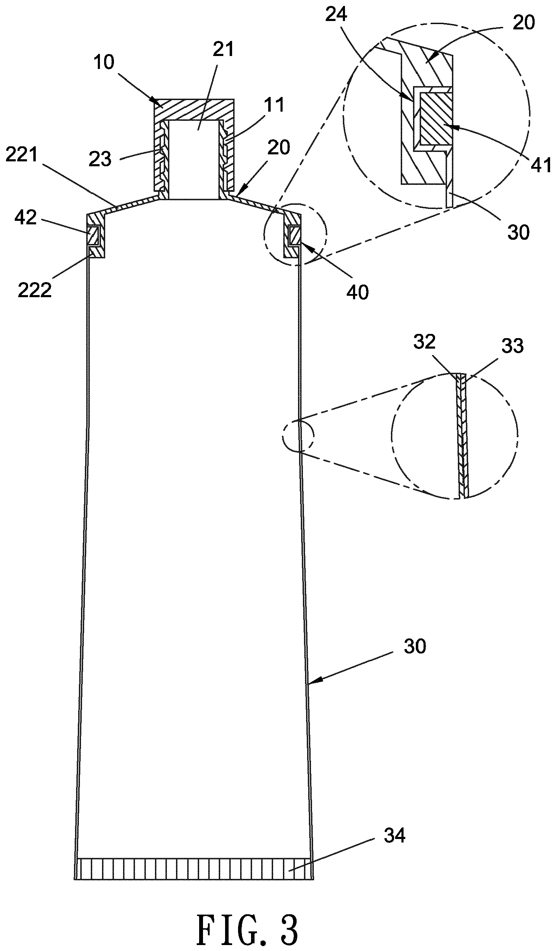

The cap 10 is made from plant materials and provided with at least one first thread 11 (as shown in Fig. 3) arranged at an inner surface of the cap 10.

The front tube 20 which is made from plant materials includes a tube body 21, a connecting segment 22, at least one second thread 23, and a circular groove 24. The tube body 21 and the connecting segment 22 are integrated into one part. The tube body 21 is a hollow tube provided with an opening on each of two ends thereof. The second thread 23 is disposed on an outer surface of the tube body 21 and able to be engaged with the first thread 11. The connecting segment 22 is connected to one end of the tube body and composed of an end plate 221 disposed on one side thereof and a circular portion 222 located on the other side thereof and opposite to the end plate 221. The circular groove 24 is arranged at an outer side of the circular portion 222 and recessed toward a center of the circular portion 222. In a preferred embodiment of the present invention, the end plate 221 of the front tube 20 is a surface extended radially from a center of the tube body 21 and basically in a shape of a circle or an ellipse.

The rear tube 30 is a hollow tube made of waterproof paper. The waterproof paper is wound to form a hollow tube and overlapping areas of the waterproof paper are attached by adhesives (such as glue able to be decomposed naturally) or connected by heat sealing, high frequency welding, or ultrasonic bonding. An upper end (head end) of the rear tube 30 is connected with the connecting segment 22 of the front tube 20. In other words, the upper end of the rear tube 30 is provided with an opening 31 which the connecting segment 22 of the front tube 20 is mounted in for connection. A lower end (tail end) 34 of the rear tube 30 is closed by heat sealing, high frequency welding, or ultrasonic bonding. Refer to Fig. 3, in a preferred embodiment, the rear tube 30 consists two layers. One layer is an inner layer 32 which is a waterproof layer made from waterproof material and the other layer is an outer layer 33 made of fiber paper. The waterproof material is poly(lactic acid) (PLA) film with certain extensibility, flexibility and excellent heat sealability. In a preferred embodiment, the upper end of the rear tube 30 is adhered to the circular groove 24 on the connecting segment 22 of the front tube 20 by the inner layer 32 to be in a sealed state.

Refer to Fig. 1 and Fig. 3, the clamping ring 40 is made from plant materials and mounted in the circular groove 24 on the connecting segment 22 of the front tube 20 for pressing and tightening the upper end of the rear tube 30 in the circular groove 24. In a preferred embodiment, the clamping ring 40 includes a first clamping member 41 and a second clamping member 42 which are able to be joined and adhered by adhesives to form a ring. A shape of the clamping ring 40 is consistent with a shape of the circular groove 24 on the connecting segment 22 of the front tube 20.

The front tube 20 and the cap 10 are used in combination with each other to seal the upper end of the rear tube 30 and form an intact and sealed paper squeeze tube which is suitable for substances or commodities including, but not limited to, toothpaste, engine lubricant, oils, adhesives, facial cleanser....and so on.

The plant material for the cap 10, the front tube 20, and the clamping ring 40 is a mixture of bamboo powder with plastic able to be decomposed naturally (such as PLA) or plant resin. Then the mixture is molded to form the cap 10, the front tube 20, and the clamping ring 40.

Additional advantages and modifications will readily occur to those skilled in the art. Therefore, the invention in its broader aspects is not limited to the specific details, and representative devices shown and described herein. Accordingly, various modifications may be made without departing from the spirit or scope of the general inventive concept as defined by the appended claims and their equivalent.

## Claims

1. A paper squeeze tube comprising:
a cap made from plant materials and provided with at least one first thread on an inner surface of the cap;
a front tube which is made from plant materials and having
a tube body which is a hollow tube provided with an opening on each of two ends thereof and,
a connecting segment which is connected to one end of the tube body, integrated with the tube body, and provided with an end plate disposed on one side thereof and a circular portion located on the other side thereof and opposite to the end plate,
at least one second thread arranged at an outer surface of the tube body and able to be engaged with the first thread,
a circular groove mounted on an outer side of the circular portion of the connecting segment and recessed toward a center of the circular portion;
a rear tube which is a hollow tube made of waterproof paper and including
an upper end connected with the connecting segment of the front tube, and
a lower end which is closed. and
a clamping ring made from plant materials and mounted in the circular groove on the connecting segment of the front tube for pressing and tightening the upper end of the rear tube in the circular groove.

2. The paper squeeze tube as claimed in claim 1, wherein the end plate of the front tube is a surface extended radially from a center of the tube body; a shape of the end plate includes a circle and an ellipse.

3. The paper squeeze tube as claimed in claim 1, wherein the rear tube includes two layers; wherein an inner layer of the two layers is a waterproof layer made from waterproof material while an outer layer of the two layers is made of fiber paper.

4. The paper squeeze tube as claimed in claim 3, wherein the waterproof material for the inner layer is poly(lactic acid) (PLA) film.

5. The paper squeeze tube as claimed in claim 4, wherein the upper end of the rear tube is adhered to the circular groove on the connecting segment of the front tube by the inner layer to be in a sealed state.

6. The paper squeeze tube as claimed in claim 1, wherein the clamping ring includes a first clamping member and a second clamping member which are working together to form a ring; a shape of the clamping ring is consistent with a shape of the circular groove on the connecting segment of the front tube.

7. The paper squeeze tube as claimed in claim 6, wherein the first clamping member and the second clamping member are joined and attached to each other by adhesives.
